# FASCICULE DE BREVET EUROPEEN

(11) **EP 3 927 529 B1**
(45) Date de publication et mention de la délivrance du brevet: **21.12.2022**
(21) Numéro de dépôt: 20710988.5
(22) Date de dépôt: 18.02.2020
(51) Int. Cl.: B29C 73/14, B29C 70/24, B29C 73/04, F01D 5/00, F01D 25/24, B64F 5/40, B29C 73/26

(54) **REPARATION OU REPRISE DE FABRICATION D'UNE PIECE EN MATERIAU COMPOSITE A RENFORT FIBREUX TISSE TRIDIMENSIONNEL**
REPARATUR ODER WIEDERAUFNAHME DER HERSTELLUNG EINES VERBUNDWERKSTOFFTEILS MIT FASERIGER DREIDIMENSIONALER GEWEBTER VERSTÄRKUNG
REPAIR OR RESUMPTION OF MANUFACTURE OF A COMPOSITE MATERIAL PART WITH FIBROUS THREE-DIMENSIONAL WOVEN REINFORCEMENT

(30) Priorité: 18.02.2019 FR 1901607
(43) Date de publication de la demande: 29.12.2021
(73) Titulaire: SAFRAN AIRCRAFT ENGINES, 75015 Paris (FR)
(72) Inventeur: CHARLAS, Mathieu, Julien, 77550 MOISSY-CRAMAYEL (FR); PAIXAO, Adrien, Francis, 77550 MOISSY-CRAMAYEL (FR)
(74) Mandataire: Cabinet Beau de Loménie
(86) Numéro de dépôt international: PCT/FR2020/050298
(87) Numéro de publication internationale: WO 2020/169920

(56) Documents cités:
- EP-A1- 2 474 477
- EP-A1- 3 090 859
- EP-A2- 2 345 532
- FR-A1- 3 008 021

## Description

### Domaine Technique

L'invention concerne la réparation de pièces en matériau composite qui comprennent un renfort fibreux obtenu par tissage tridimensionnel densifié par une matrice.

### Technique antérieure

Les pièces en matériau composite comprenant un renfort obtenu par tissage tridimensionnel présente l'avantage d'avoir un caractère « non-délaminable » par rapport aux pièces en matériau composite dont le renfort fibreux est obtenu par empilement ou drapage de plis fibreux bidimensionnels.

Les pièces en matériau composite réalisées à partir de plis fibreux bidimensionnels sont facilement réparables car les plis sont séparables et peuvent être donc remplacées par de nouveaux plis sains en cas d'endommagement. Des exemples de solutions de réparation de pièces en matériau composite sont notamment décrits dans les documents US 2015/0185128, US 2012/0080135 et US 2007/0095457.

Le document EP 3 090 859 A1 divulgue un procédé de réparation d'une pièce en matériau composite et une pièce en matériau composite comprenant un renfort fibreux.

Ces solutions connues consistent à coller un patch fibreux pré-imprégné sur la zone endommagée ou la zone à reprendre de la pièce en matériau composite, le patch pouvant être constitué d'un ou plusieurs plis fibreux. Toutefois, ce type de solution présente un risque de délaminage du patch collé et n'est donc pas souhaitable pour la réparation de pièces en matériau composite à renfort fibreux tridimensionnel car le matériau perdrait alors son caractère « non-délaminable ».

Or, il existe un besoin pour une solution de réparation de pièces en matériau composite à renfort fibreux tridimensionnel qui n'altère pas la résistance à la délamination présentée initialement par le matériau.

### Exposé de l'invention

A cet effet, l'invention propose un procédé de réparation d'une pièce en matériau composite comprenant un renfort fibreux présentant un tissage tridimensionnel entre une pluralité de fils de chaîne et une pluralité de file de trame, ledit renfort fibreux étant densifié par une matrice, caractérisé en ce qu'il comprend :
- l'identification d'au moins une zone endommagée dans la pièce,
- la réalisation d'une portion évidée par retrait du matériau composite au niveau de la zone endommagée de manière à former une portion évidée s'étendant depuis une première face de la pièce en matériau composite jusqu'à une deuxième face de ladite pièce,
- la réalisation d'une première pluralité de rainures s'étendant sur la première face de la pièce en matériau composite à partir du ou des bords de la portion évidée,
- la réalisation d'une deuxième pluralité de rainures s'étendant sur la deuxième face de la pièce en matériau composite à partir du ou des bords de la portion évidée,
- la réalisation d'une pluralité d'orifices dans l'épaisseur de la pièce en matériau composite, chaque orifice débouchant à la fois dans une rainure de la première pluralité de rainures et dans une rainure de la deuxième pluralité de rainures,
- le tissage tridimensionnel d'au moins préforme fibreuse de pièce de comblement comprenant une portion centrale ayant une forme correspondant à la forme de la portion évidée de la pièce en matériau composite et une pluralité de faisceaux fibreux s'étendant depuis la portion centrale,
- le placement de la portion centrale de la préforme fibreuse de pièce de comblement dans le volume libre de la pièce en matériau composite délimité par la portion évidée,
- le placement d'une première partie des faisceaux fibreux de ladite au moins une préforme dans les rainures de la première pluralité de rainures présentes sur la première face de la pièce et dans les orifices de la pluralité d'orifices de manière à ce que les faisceaux fibreux de la première partie de faisceaux fibreux de ladite au moins une préforme débouchent dans les rainures de la deuxième pluralité de rainures,
- le placement d'une deuxième partie des faisceaux fibreux de ladite au moins une préforme dans les rainures de la deuxième pluralité de rainures présentes sur la deuxième face de la pièce et dans les orifices de la pluralité d'orifices de manière à ce que les faisceaux fibreux de la deuxième de faisceaux fibreux de ladite au moins une préforme débouchent dans les rainures de la première pluralité de rainures,
- l'imprégnation de ladite au moins une préforme fibreuse avec une résine précurseur d'une matrice,
- la transformation de la résine en matrice afin d'obtenir une pièce de comblement en matériau composite comprenant un renfort fibreux densifié par une matrice, ladite pièce de comblement occupant le volume défini par la portion évidée.

En utilisant une pièce de comblement comprenant au moins une préforme ayant une portion centrale présentant un tissage tridimensionnel qui attachée mécaniquement à la pièce par des faisceaux fibreux, il est possible de réaliser des réparations qui présentent une grande résistance à la délamination. La réparation d'une zone endommagée dans la pièce en matériau composite selon l'invention est donc particulièrement robuste.

Selon une première caractéristique du procédé de l'invention, le procédé de réparation comprend :
- le tissage tridimensionnel d'une première préforme fibreuse de pièce de comblement comprenant une portion centrale ayant une forme correspondant à la forme de la portion évidée du côté de la première face de la pièce en matériau composite et une pluralité de faisceaux fibreux s'étendant depuis la portion centrale,
- le tissage tridimensionnel d'une deuxième préforme fibreuse de pièce de comblement comprenant une portion centrale ayant une forme correspondant à la forme de la portion évidée du côté de la deuxième face de la pièce en matériau composite et une pluralité de faisceaux fibreux s'étendant depuis la portion centrale,
- le placement de la portion centrale de la première préforme fibreuse de pièce de comblement dans une partie du volume libre de la pièce en matériau composite délimité par la portion évidée et présente du côté de la première face de la pièce et des faisceaux fibreux dans les rainures de la première pluralité de rainures présentes sur la première face de la pièce et dans les orifices de la pluralité d'orifices de manière à ce que les faisceaux fibreux de la première préforme débouchent dans les rainures de la deuxième pluralité de rainures,
- le placement de la portion centrale de la deuxième préforme fibreuse de pièce de comblement dans une autre partie du volume libre de la pièce en matériau composite délimité par la portion évidée et présente du côté de la deuxième face de la pièce et des faisceaux fibreux dans les rainures de la deuxième pluralité de rainures présentes sur la deuxième face de la pièce et dans les orifices de la pluralité d'orifices de manière à ce que les faisceaux fibreux de la deuxième préforme débouchent dans les rainures de la première pluralité de rainures,

Selon une deuxième caractéristique du procédé de l'invention, la réalisation de la portion évidée comprend la formation de plusieurs bords en vis-à-vis comprenant chacun des premier et deuxième biseaux, la portion centrale de la première préforme fibreuse de pièce de comblement présentant une géométrie complémentaire d'une partie du volume de la portion évidée définie entre les premiers biseaux des bords en vis-à-vis et la portion centrale de la deuxième préforme fibreuse de pièce de comblement présentant une géométrie complémentaire de l'autre partie du volume de la portion évidée définie entre les deuxièmes biseaux des bords en vis-à-vis. Cela permet d'optimiser la transmission des charges mécaniques sur l'interface de collage entre la pièce de comblement et la structure en matériau composite de la pièce à réparer.

Selon une troisième caractéristique du procédé de l'invention, la portion évidée présente une forme polygonale, les rainures de la première pluralité de rainures s'étendant chacune à partir d'un sommet du polygone formé par la portion évidée sur la première face de la pièce en matériau composite, les rainures de la deuxième pluralité de rainures s'étendant chacune à partir d'un sommet du polygone formé par la portion évidée sur la deuxième face de la pièce en matériau composite. Cela permet d'obtenir une configuration d'attache équilibrée de chaque préforme fibreuse de pièce de comblement et de renforcer ainsi le maintien de la pièce comblement sur la pièce en matériau composite à réparer.

Selon une quatrième caractéristique du procédé de l'invention, les première et deuxième pluralités de rainures comprennent chacune des rainures principales s'étendant à partir des bords de la portion évidée débouchant respectivement sur les première et deuxième faces de la pièce en matériau composite et des rainures secondaires s'étendant à partir de chaque rainure principale, au moins une partie des orifices de la pluralité d'orifices débouchant à la fois dans une rainure secondaire de la première pluralité de rainures et dans une rainure secondaire de la deuxième pluralité de rainures. Il est ainsi possible de former un réseau d'attache en forme de « flocon de neige » pour chaque préforme fibreuse de pièce de comblement et de renforcer ainsi le maintien de la pièce comblement sur la pièce en matériau composite à réparer.

Selon une cinquième caractéristique du procédé de l'invention, celui-ci comprend en outre l'introduction des faisceaux fibreux de la première préforme fibreuse de pièce de comblement dans la portion centrale de la deuxième préforme fibreuse et l'introduction des faisceaux fibreux de la deuxième préforme fibreuse de pièce de comblement dans la portion centrale de la première préforme fibreuse. Cela permet de renforcer encore le maintien des préformes fibreuse sur la pièce en matériau composite et d'améliorer la tenue de la pièce de comblement.

L'invention a également pour objet une pièce en matériau composite comprenant un renfort fibreux présentant un tissage tridimensionnel entre une pluralité de fils de chaîne et une pluralité de fils de trame, ledit renfort fibreux étant densifié par une matrice, caractérisée en ce que le renfort fibreux densifié par la matrice comporte au moins une portion évidée s'étendant depuis une première face de la pièce en matériau composite jusqu'à une deuxième face de ladite pièce et en ce qu'une pièce de comblement en matériau composite est présente dans le volume libre de la pièce en matériau composite délimité par ladite au moins une portion évidée, la pièce en matériau composite comprenant une première pluralité de rainures s'étendant sur la première face de ladite pièce à partir du ou des bords de la portion évidée débouchant sur la première face et une deuxième pluralité de rainures s'étendant sur la deuxième face de ladite pièce à partir du ou des bords de la portion évidée débouchant sur la deuxième face, la pièce en matériau composite comprenant en outre une pluralité d'orifices s'étendant dans l'épaisseur de la pièce en matériau composite, chaque orifice débouchant à la fois dans une rainure de la première pluralité de rainures et dans une rainure de la deuxième pluralité de rainures, la pièce de comblement comprenant au moins une préforme fibreuse de pièce de comblement comprenant une portion centrale présente dans le volume de la portion évidée et une pluralité de faisceaux fibreux s'étendant depuis la portion centrale, la portion centrale de ladite au moins une préforme présentant un tissage tridimensionnel, une première partie des faisceaux fibreux de ladite au moins une préforme fibreuse étant présents dans les rainures de la première pluralité de rainures présentes sur la première face de la pièce en matériau composite et dans les orifices de la pluralité d'orifices de manière à ce que les faisceaux fibreux de la première partie de faisceaux fibreux de ladite au moins une préforme débouchent dans les rainures de la deuxième pluralité de rainures, une deuxième partie de faisceaux fibreux de ladite au moins une préforme fibreuse étant présents dans les rainures de la deuxième pluralité de rainures présentes sur la deuxième face de la pièce en matériau composite et dans les orifices de la pluralité d'orifices de manière à ce que les faisceaux fibreux de la deuxième partie de faisceaux fibreux de ladite au moins une préforme débouchent dans les rainures de la première pluralité de rainures.

Selon une première caractéristique de la pièce de l'invention, la pièce de comblement comprend des première et deuxième préformes fibreuses de pièce de comblement comprenant chacune une portion centrale présente dans une partie du volume de la portion évidée et une pluralité de faisceaux fibreux s'étendant depuis la portion centrale, la portion centrale de chaque préforme présentant un tissage tridimensionnel, les faisceaux fibreux de la première préforme fibreuse étant présents dans les rainures de la première pluralité de rainures présentes sur la première face de la pièce en matériau composite et dans les orifices de la pluralité d'orifices de manière à ce que les faisceaux fibreux de la première préforme débouchent dans les rainures de la deuxième pluralité de rainures, les faisceaux fibreux de la deuxième préforme fibreuse étant présents dans les rainures de la deuxième pluralité de rainures présentes sur la deuxième face de la pièce en matériau composite et dans les orifices de la pluralité d'orifices de manière à ce que les faisceaux fibreux de la deuxième préforme débouchent dans les rainures de la première pluralité de rainures.

Selon une deuxième caractéristique de la pièce de l'invention, la portion évidée comprend au moins deux bords en vis-à-vis comprenant chacun des premier et deuxième biseaux, la portion centrale de la première préforme fibreuse de pièce de comblement présentant une géométrie complémentaire d'une partie du volume de la portion évidée définie entre les premiers biseaux des bords en vis-à-vis et la portion centrale de la deuxième préforme fibreuse de pièce de comblement présentant une géométrie complémentaire de l'autre partie du volume de la portion évidée définie entre les deuxièmes biseaux des bords en vis-à-vis.

Selon une troisième caractéristique de la pièce de l'invention, la portion évidée présente une forme polygonale, les rainures de la première pluralité de rainures s'étendant chacune à partir d'un sommet du polygone formé par la portion évidée sur la première face de la pièce en matériau composite, les rainures de la deuxième pluralité de rainures s'étendant chacune à partir d'un sommet du polygone formé par la portion d'évidée sur la deuxième face de la pièce en matériau composite.

Selon une quatrième caractéristique de la pièce de l'invention, les première et deuxième pluralités de rainures comprennent chacune des rainures principales s'étendant à partir des bords de la portion évidée débouchant respectivement sur les première et deuxième faces de la pièce en matériau composite et des rainures secondaires s'étendant à partir de chaque rainure principale, au moins une partie des orifices de la pluralité d'orifices débouchant à la fois dans une rainure secondaire de la première pluralité de rainures et dans une rainure secondaire de la deuxième pluralité de rainures.

Selon une cinquième caractéristique de la pièce de l'invention, les faisceaux fibreux de la première préforme fibreuse de pièce de comblement s'étendent dans la portion centrale de la deuxième préforme fibreuse et les faisceaux fibreux de la deuxième préforme fibreuse de pièce de comblement s'étendent dans la portion centrale de la première préforme fibreuse.

Selon une sixième caractéristique de la pièce de l'invention, la pièce correspond à un carter de moteur aéronautique à turbine à gaz. Dans ce cas, l'invention a également pour objet un moteur aéronautique à turbine à gaz ayant un carter selon l'invention, par exemple un carter de soufflante, ainsi qu'un aéronef comprenant un ou plusieurs de ces moteurs aéronautiques.

### Brève description des dessins

[Fig. 1] La figure 1 est une vue en perspective d'un moteur aéronautique comprenant un carter de soufflante,
[Fig. 2A] La figure 2A est une vue de dessus d'une zone d'impact sur le carter de soufflante du moteur de la figure 1,
[Fig. 2B] La figure 2B est une vue en coupe radiale d'une zone d'impact sur le carter de soufflante du moteur de la figure 1,
[Fig. 3A] La figure 3A est une vue de dessus montrant la réalisation d'une portion évidée dans le carter de soufflante conformément à un mode de réalisation de l'invention,
[Fig. 3B] La figure 3B est une vue en coupe radiale montrant la réalisation d'une portion évidée dans le carter de soufflante conformément à un mode de réalisation de l'invention,
[Fig. 4A] La figure 4A est une vue de dessus représentant une face montrant la formation sur les deux faces du carter de soufflante de rainures autour de la portion évidée,
[Fig. 4B] La figure 4B est une vue en coupe radiale montrant la formation sur les deux faces du carter de soufflante de rainures autour de la portion évidée,
[Fig. 5A] La figure 5A est une vue de dessus représentant la face montrant la formation d'une pluralité d'orifices dans le carter de soufflante débouchant dans les rainures des figures 4A et 4B,
[Fig. 5B] La figure 5B est une vue en coupe radiale montrant la formation d'une pluralité d'orifices dans le carter de soufflante débouchant dans les rainures des figures 4A et 4B,
[Fig. 6A] La figure 6A est une vue de dessus représentant la face externe montrant la mise en place de préformes fibreuses d'une pièce de comblement,
[Fig. 6B] La figure 6B est une vue de dessous représentant une face interne montrant la mise en place de préformes fibreuses d'une pièce de comblement,
[Fig. 6C] La figure 6C est une vue en coupe radiale montrant la mise en place de préformes fibreuses d'une pièce de comblement,
[Fig. 7A] La figure 7A est une vue de dessus représentant la face externe montrant le placement des faisceaux fibreux d'une préforme fibreuse de la figure 6A,
[Fig. 7B] La figure 7B est une vue en coupe radiale montrant le placement des faisceaux fibreux de chaque préforme fibreuse des figures 6A et 6B,

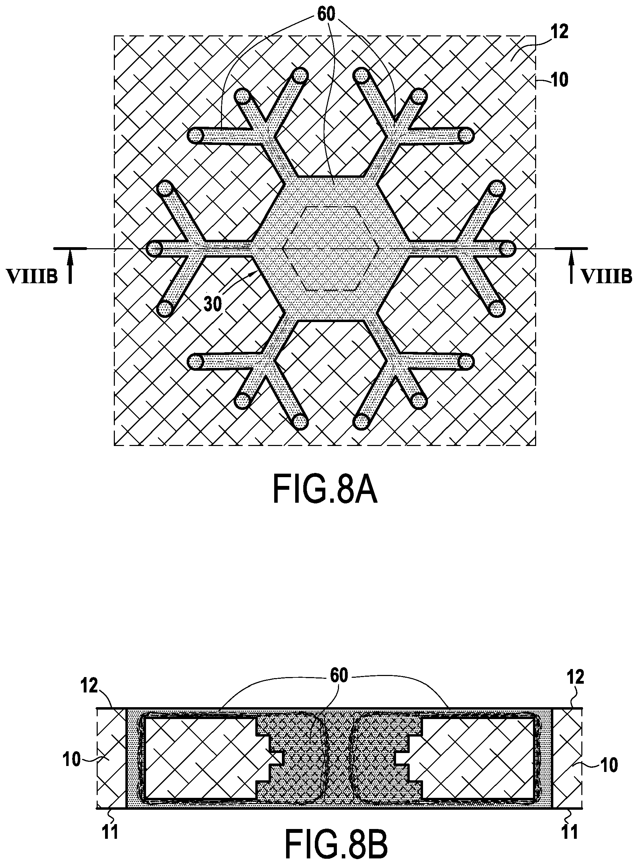

[Fig. 8A] La figure 8A est une vue de dessus représentant une face externe montrant l'obtention d'une pièce de comblement dans le carter de soufflante,
[Fig. 8B] La figure 8B est une vue en coupe radiale montrant l'obtention d'une pièce de comblement dans le carter de soufflante,
[Fig. 9] La figure 9 est une vue en coupe montrant une préforme fibreuse d'une pièce de comblement selon un autre mode de réalisation de l'invention,
[Fig. 10] La figure 10 est une vue en coupe radiale montrant le placement des faisceaux fibreux de la préforme de la figure 9.

### Description des modes de réalisation

L'invention s'applique d'une manière générale à toute pièce en matériau composite comprenant un renfort fibreux présentant un tissage tridimensionnel, le renfort étant densifié par une matrice.

L'invention sera décrite ci-après dans le cadre non limitatif de son application à un carter de soufflante de moteur aéronautique à turbine à gaz. L'invention s'applique également à d'autres pièces en matériau composite de moteur aéronautiques comme par exemple des aubes fixes de guidage encore appelées « OGV » ou des plateformes inter-aubes.

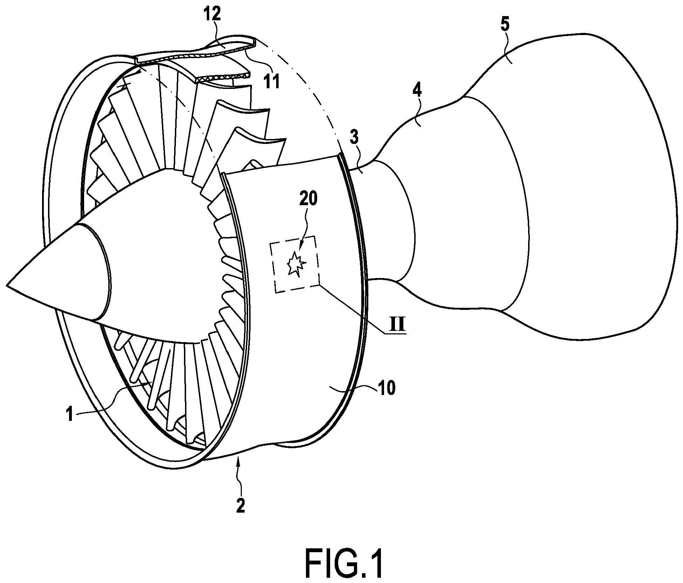

Un tel moteur, comme montré très schématiquement par la figure 1, comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 10 présentant une forme de révolution.

La carter de soufflante 10 qui est ici réalisé en matériau composite à matrice organique, c'est-à-dire à partir d'un renfort en fibres par exemple de carbone, verre, aramide ou céramique, densifié par une matrice en polymère, par exemple époxide, bismaléimide ou polyimide. Le renfort fibreux est réalisé à partir d'une texture fibreuse en forme de bande obtenue par tissage tridimensionnel en une seule pièce, la texture étant mise en forme par enroulement sur un outillage de support. Le renfort fibreux ainsi constitué est ensuite densifié par une matrice. La fabrication d'un tel carter est notamment décrite dans le document US 8 322 971. Le carter de soufflante en matériau composite 10 comporte une face interne 11 qui définit la veine d'entrée d'air du moteur et une face externe 12.

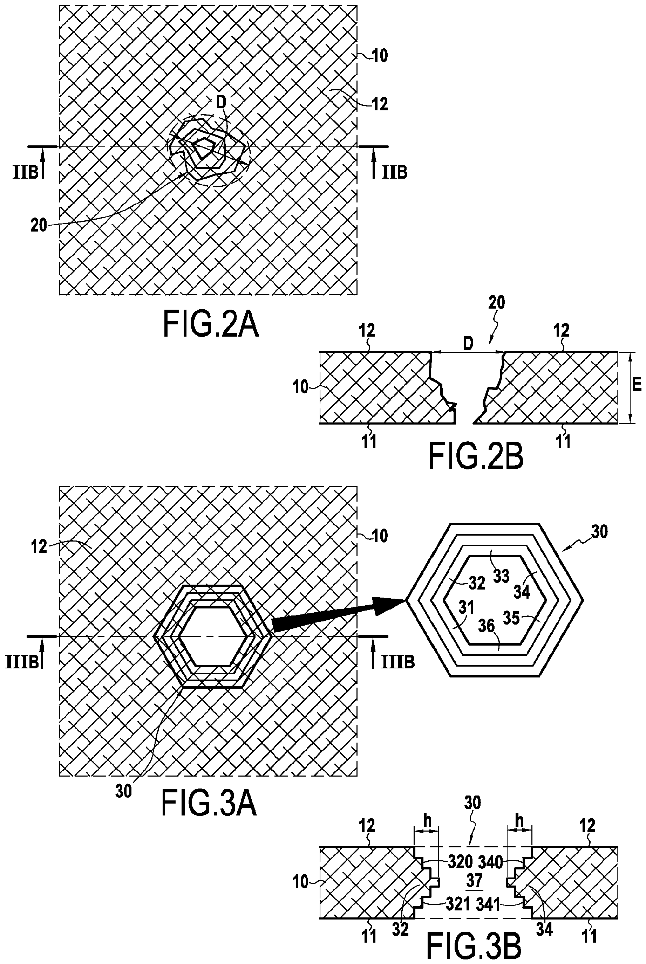

Sur les figures 1, 2A et 2B, le carter 10 présente une zone endommagée 20 résultant par exemple d'un débris d'aube projetée sur la surface interne 11 du carter.

Conformément au procédé de réparation de l'invention, on usine le carter au niveau de la zone endommagée 20 afin de retirer le matériau composite touché et préparer la zone pour la réparation. Le retrait du matériau composite est réalisé sur une surface déterminée du carter couvrant au moins la zone identifiée comme endommagée et sur toute l'épaisseur du carter. On obtient ainsi, comme illustrée sur les figures 3A et 3B, une portion évidée 30 qui débouche à la fois sur la face interne 11 et sur la face externe 12 du carter 10.

Dans l'exemple décrit ici et selon une caractéristique particulière de l'invention, la portion évidée est usinée suivant une forme polygonale avec des bords 31 à 36 comportant chacun deux formes prismatiques ou biseaux de hauteur h ayant un sommet commun. Plus précisément, les bords 31 à 36 comportent chacun respectivement un premier biseau comme les biseaux 320 et 340 illustrés sur la figure 3B respectivement pour les bords 32 et 34 et un deuxième biseau comme les biseaux 321 et 341 illustrés sur la figure 3B respectivement pour les bords 32 et 34. Les bords peuvent être usinés en escalier comme sur la figure 3B ou suivant un profil lisse. Chaque arête anguleuse présente un congé r non représenté sur la figure 3B. La hauteur h des biseaux et le congé r sont déterminés en fonction du diamètre D de zone endommagée 20 et de l'épaisseur E du matériau composite à réparer. La hauteur h est de préférence déterminée telle que E/3<h<2E/3. Le congé r est de préférence déterminé tel que D/5<r<5D.

La portion évidée 30 délimite un volume libre de matière 37 destinée à être occupé par une pièce de comblement comme expliqué ci-après.

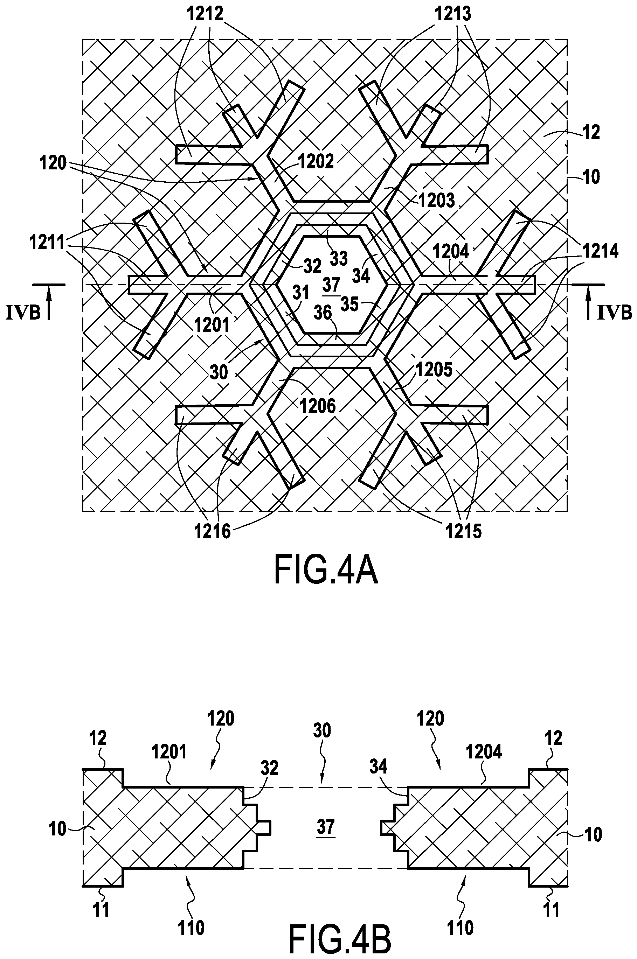

Une fois la portion évidée 30 réalisée, on usine une première pluralité de rainures 110 s'étendant sur la face interne 11 du carter en matériau composite à partir des bords 31 à 36 de la portion évidée. De même, on usine une deuxième pluralité de rainures 120 s'étendant sur la face externe 12 du carter en matériau composite à partir des bords 31 à 36 de la portion évidée. Les rainures 110 et 120 sont réalisées sur la surface de la pièce en matériau composite. Dans l'exemple décrit ici et selon une caractéristique particulière de l'invention, chaque pluralité de rainures comprend des rainures principales, comme les rainures principales 1201 à 1206 de la pluralité de rainures 120 illustrées sur la figure 4B, qui sont prolongées par des rainures secondaires, comme les rainures secondaires 1211 à 1216 illustrées sur la figure 4B. Les rainures principales s'étendent vers l'extérieur de la portion évidée à partir d'une extrémité jointive avec un des bords de la portion évidée et jusqu'à une autre extrémité opposée à partir de laquelle s'étendent une ou plusieurs rainures secondaires également dans une direction dirigée vers l'extérieur de la portion évidée. Les rainures, principales et secondaires, sont formées de manière symétrique sur les deux faces de la pièce en matériau composite, c'est-à-dire qu'une rainure d'une pluralité de rainures sur une face de la pièce se trouve à l'aplomb d'une rainure de la pluralité de rainures présentes sur l'autre face de la pièce.

Dans l'exemple décrit ici, chaque pluralité de rainures présentes sur les deux faces du carter a une forme en flocon de neige avec 6 branches principales formées par les rainures principales et 3 branches secondaires à l'extrémité de chaque branche principale formées par les rainures secondaires. Le nombre de rainures secondaires prolongeant chaque rainure principale peut varier entre 0 et 10.

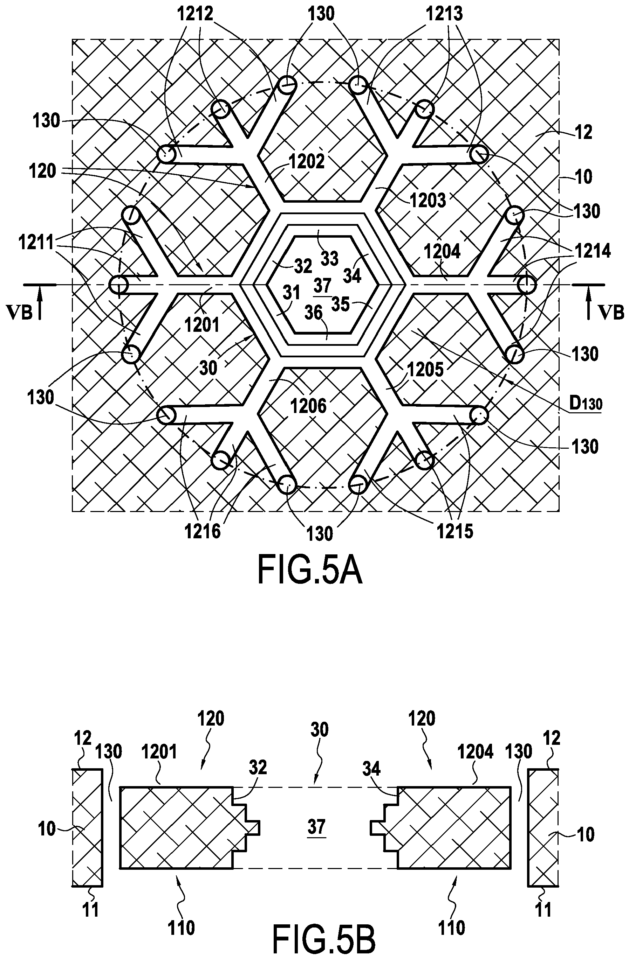

Une fois les rainures réalisées, on forme une pluralité d'orifices dans l'épaisseur de la pièce en matériau composite, chaque orifice débouchant à la fois dans une rainure de la première pluralité de rainures et dans une rainure de la deuxième pluralité de rainures. Plus précisément, dans l'exemple décrit ici et comme illustrés sur les figures 5A et 5B, 18 orifices 130 sont formés au niveau des rainures secondaires 1211 à 1216 présentes sur la face externe 12 et débouchent dans les rainures secondaires correspondantes présentes sur la face interne 11. Dans l'exemple décrit ici, la pluralité d'orifices 130 est distribuée le long d'un cercle concentrique avec le centre de la portion évidée 30 dont le diamètre D₁₃₀ est déterminé en fonction du diamètre D du défaut à réparer tel que D<D₁₃₀<5D.

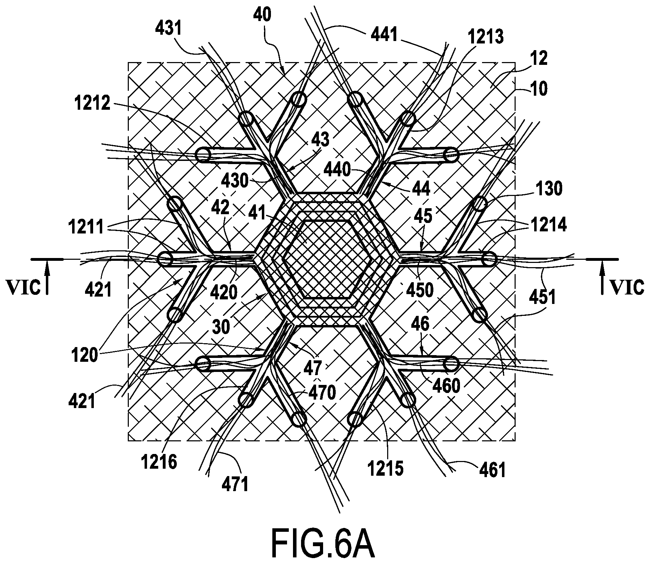

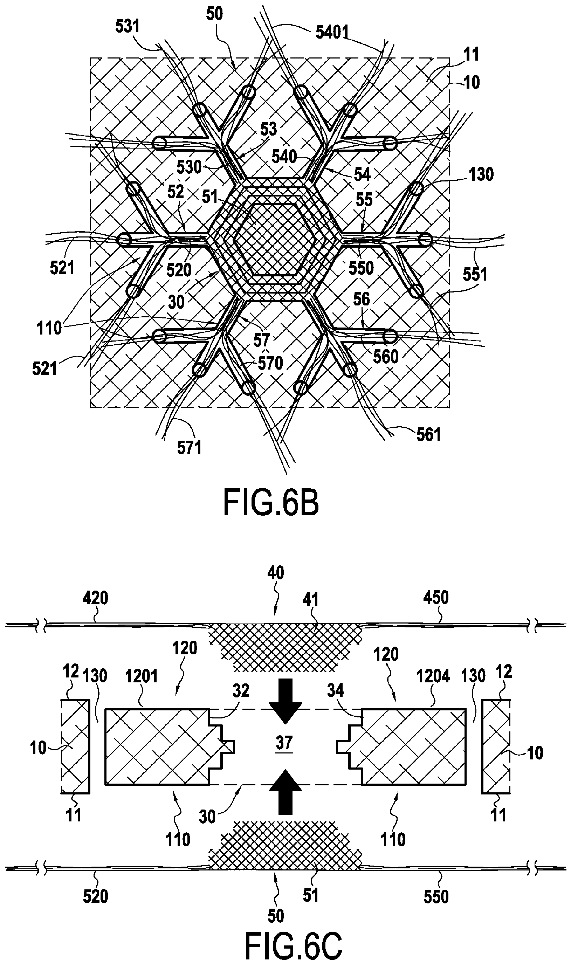

Après les différents usinages décrits précédemment, les surfaces de la pièce 10 sont nettoyées et dégraissées. Le nettoyage a pour but de retirer les poussières et toutes les impuretés susceptibles de polluer les surfaces de la pièce, le nettoyage pouvant être notamment réalisé par soufflage d'air sec et déshuilé. Le dégraissage des surfaces peut être réalisé à l'aide d'un solvant de type éthanol ou isopropanol. Toujours conformément au procédé de réparation de l'invention, on réalise par tissage tridimensionnel des première et deuxième préformes fibreuses. Comme illustré sur les figures 6A, 6B et 6C, on réalise des première et deuxième préformes 40, 50 identiques comprenant chacune une portion centrale 41, 51 à partir de laquelle s'étend une pluralité de faisceaux fibreux 42 à 47, 52 à 57. La portion centrale 41 de la première préforme 40 présente une forme correspondant à la forme de la portion évidée 30 du côté de la face interne 11 du carter 10, la portion centrale 41 étant destinée à combler la moitié du volume libre 37 délimité par la portion évidée 30. La portion centrale 51 de la deuxième préforme 50 présente une forme correspondant à la forme de la portion évidée 30 du côté de la face externe 12 du carter 10, la portion centrale 51 étant destinée à combler l'autre moitié du volume libre 37. Les faisceaux fibreux 42 à 47 et 52 à 57 sont constitués de fils continus issus respectivement des portions centrales 41 et 51 qui sont regroupés en faisceaux. Dans l'exemple décrits ici, les faisceaux fibreux 42 à 47 et 52 à 57 comportent respectivement des faisceaux principaux 420 à 470 et 520 à 570 qui sont destinés à être placés dans les rainures principales des pluralités de rainures 110 et 120, ces faisceaux principaux étant ensuite subdivisés respectivement en faisceaux secondaires 421 à 471 et 521 à 571 qui sont destinés à être placés dans les rainures secondaires ainsi que dans les orifices 130 comme expliqué ci-après. Les portions centrales des première et deuxième préformes sont obtenues par tissage tridimensionnel entre une première pluralité de couches de fils, par exemple des fils de chaîne, et une deuxième pluralité de couches de fils, par exemple des fils de trame. Par "tissage tridimensionnel" ou "tissage 3D", on entend ici un mode de tissage par lequel certains au moins des fils de la première pluralité de couches de fils lient des fils de la deuxième pluralité de couches de fils sur plusieurs couches ou inversement. Le tissage tridimensionnel de la préforme fibreuse de pièce de comblement peut être réalisé avec une armure de type interlock à plusieurs couches de fils de chaîne et de fils de trame. Un tissage tridimensionnel avec armure interlock est un tissage dans lequel chaque fil de chaîne relie entre elles plusieurs couches de fils de trame, les trajets des fils de chaîne étant identiques. Le profil en forme de prisme des portions centrales est obtenu par ajout/retrait d'une ou plusieurs couches de fils de chaîne et de trame. D'autres modes de tissage tridimensionnel sont envisageables tel que par exemple des tissages multicouches à armures multi-satin ou multi-toile. Des armures de ce type sont décrites dans le document US 2010/0144227. Les faisceaux fibreux s'étendant à partir de la portion centrale peuvent correspondre à des fils continus tissés entre eux suivant un tissage tridimensionnel (ex. tressage) ou bidimensionnel. Les fils des faisceaux fibreux peuvent être également regroupés ensemble par guipage ou laissés libres.

Comme illustré sur les figures 6A à 6C, les première et deuxième préformes fibreuses de pièce de comblement 40 et 50 sont placées respectivement du côté de la face externe 12 et du côté de la face interne 11 en plaçant les portions centrales 41 et 51 dans le volume 37 de la portion évidée 30 et les faisceaux dans les rainures principales et leur ramification en faisceaux secondaires dans les rainures secondaires.

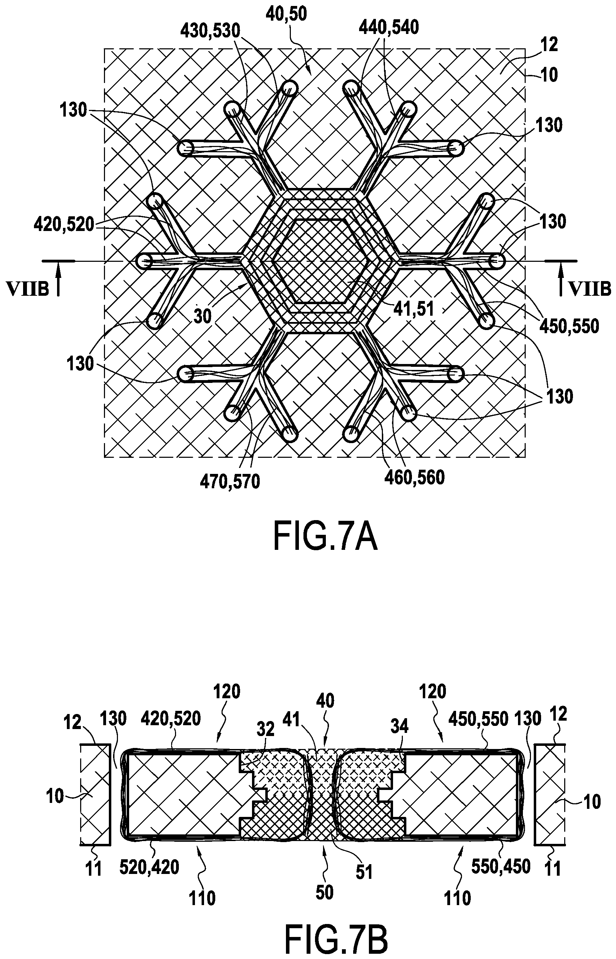

Une fois les préformes fibreuses 40 et 50 ainsi en place, les faisceaux fibreux, ici les faisceaux secondaires 421 à 471 et 521 à 571, sont introduits dans les orifices 130 comme représentés sur les figures 7A, 7B et 7C.

Dans l'exemple décrit ici et selon une caractéristique particulière de l'invention, les faisceaux fibreux de la première préforme 40, ici les faisceaux secondaires 421 à 471, après être passés dans les orifices 130 ressortent sur la face interne 11, longent les rainures présentes sur cette face et sont introduits dans la portion centrale 51 de la deuxième préforme fibreuse 50 (figure 7B). De même, les faisceaux fibreux de la deuxième préforme 50, ici les faisceaux secondaires 521 à 571, après être passés dans les orifices 130 ressortent sur la face externe 12, longent les rainures présentes sur cette face et sont introduits dans la portion centrale 41 de la première préforme fibreuse 40.

On procède ensuite à la densification des deux préformes fibreuses 40 et 50 par une matrice. La densification des préformes consiste à combler leur porosité, dans tout ou partie du volume de celles-ci, par le matériau constitutif de la matrice. La matrice peut être obtenue de façon connue en soi suivant le procédé par voie liquide.

Le procédé par voie liquide consiste à imprégner les préformes par une composition liquide contenant un précurseur organique du matériau de la matrice. Le précurseur organique se présente habituellement sous forme d'un polymère, tel qu'une résine, éventuellement dilué dans un solvant. La pièce en matériau composite et les préformes de pièce de comblement sont placées dans un moule pouvant être fermé de manière étanche, le moule pouvant correspondre au moule d'origine de la pièce ou à un moule partiel ne reprenant que la forme de la zone de la pièce à réparer. Ensuite, on injecte le précurseur liquide de matrice, par exemple une résine, dans tout le logement pour imprégner toute la partie fibreuse des préformes.

La transformation du précurseur en matrice organique, à savoir sa polymérisation, est réalisée par traitement thermique, généralement par chauffage du moule, après élimination du solvant éventuel et réticulation du polymère, les préformes étant toujours maintenues dans le moule. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification des préformes de pièce de comblement peut être réalisée par le procédé bien connu de moulage par transfert dit RTM ("Resin Transfert Moulding"). Conformément au procédé RTM, on place la pièce à réparer avec les préformes de pièce de comblement dans un moule présentant la forme de la pièce à réaliser. Une résine thermodurcissable est injectée dans l'espace interne qui comprend les préformes. Un gradient de pression est généralement établi dans cet espace interne entre l'endroit où est injecté la résine et les orifices d'évacuation de cette dernière afin de contrôler et d'optimiser l'imprégnation du renfort par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

La résine injectée dans les préformes de pièce de comblement est de préférence identique à celle utilisée pour fabriquer la pièce en matériau composite. Il est toutefois possible d'utiliser une résine différente pour la réparation mais qui présente des niveaux de températures de réticulation et/ou de polymérisation compatibles avec la matrice déjà présente dans la pièce à réparer.

Après l'injection et la polymérisation, la pièce ou partie de celle-ci est démoulée. Au final, la pièce peut être ébavurée par ponçage par abrasif doux, préférentiellement par ponçage manuel avec un papier abrasif tel GRIT 220 afin d'égaliser la surface de partie réparée avec le reste de la surface intacte de la pièce. On obtient alors une pièce en matériau composite, ici un carter de soufflante 10, comprenant une pièce de comblement 60 constitué d'un renfort fibreux correspondant aux deux préformes fibreuses 40 et 50 densifié par une matrice.

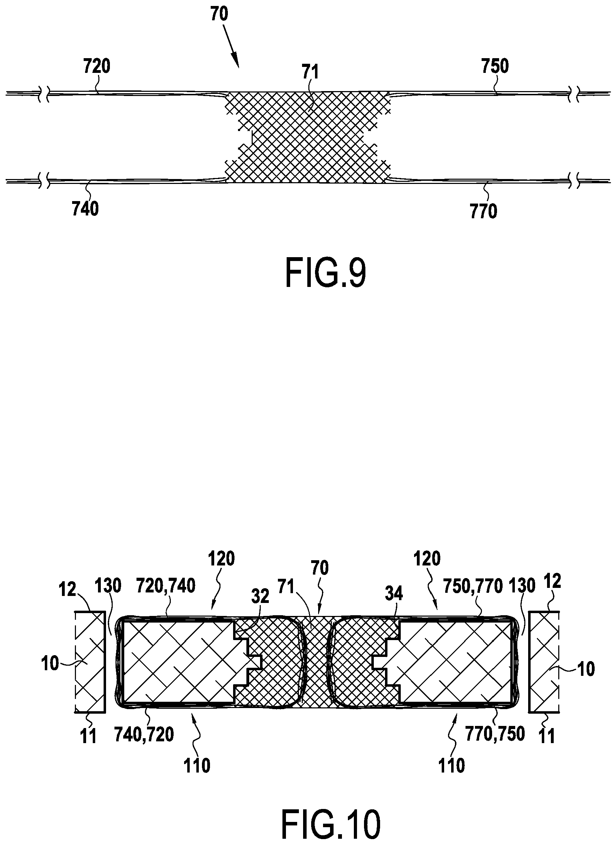

Dans l'exemple décrit ci-avant, le renfort fibreux de la pièce de comblement est obtenu à partir d'une première et d'une deuxième préformes fibreuses. Toutefois, conformément à l'invention, le renfort fibreux de la pièce de comblement peut être également obtenu à partir d'une seule préforme fibreuse. La figure 9 illustre une préforme fibreuse 70 qui peut être utilisée pour former une pièce de comblement à la place des première et deuxième préformes fibreuses 40 et 50 décrites précédemment. La préforme fibreuse 70 est réalisée en une seule pièce et présente une forme et des dimensions permettant son intégration dans la zone à réparer du carter 10 telle que représentée sur le figure 5A et 5B, à savoir après formation de la portion évidée 30, des rainures 110 et 120 (rainures principales et secondaires) et des orifices 130.

Plus précisément, la préforme fibreuse 70 comprend une portion centrale 71 ayant une forme correspondant à la forme de la portion évidée 30, la portion centrale 71 étant destinée à combler l'ensemble du volume libre 37 délimité par la portion évidée 30 (figure 5B). La préforme fibreuse 70 comprend également des faisceaux fibreux 720, 740, 750 et 770 qui sont destinés à être placés dans les rainures principales des pluralités de rainures 110 et 120, ces faisceaux principaux étant ensuite subdivisés respectivement en faisceaux secondaires qui sont destinés à être placés dans les rainures secondaires ainsi que dans les orifices 130. La préforme 70 est obtenue par tissage tridimensionnel.

Comme illustré sur la figure 10, la préforme fibreuse de pièce de comblement 70 est mise en place en plaçant la portion centrale 71 dans le volume 37 de la portion évidée 30, la portion centrale étant apte à se déformer pour permettre son placement dans le volume 37. Les faisceaux fibreux sont placés dans les rainures principales et leur ramification en faisceaux secondaires dans les rainures secondaires comme déjà expliqué ci-avant pour les préformes 40 et 50.

Une fois la préforme fibreuse 70 ainsi en place, les faisceaux fibreux, ici les faisceaux 720, 740, 750 et 770, sont introduits dans les orifices 130 comme représentés sur la figure 10.

Dans l'exemple décrit ici et selon une caractéristique particulière de l'invention, une première partie des faisceaux fibreux de la préforme 70, ici les faisceaux 720 et 750, après être passés dans les orifices 130 ressortent sur la face interne 11, longent les rainures présentes sur cette face et sont introduits dans la portion centrale 71 de la préforme fibreuse 70. De même, une deuxième partie des faisceaux fibreux de la préforme 70, ici les faisceaux 740 et 770, après être passés dans les orifices 130 ressortent sur la face externe 12, longent les rainures présentes sur cette face et sont introduits dans la portion centrale 71 de la préforme fibreuse 70.

La densification de la préforme fibreuse 70 est ensuite réalisée de la même manière que celle décrite précédemment pour les première et deuxième préformes fibreuses 40 et 50 et n'est pas répétée une nouvelle fois ici pas souci de simplification.

## Revendications

1. Procédé de réparation d'une pièce en matériau composite (10) comprenant un renfort fibreux présentant un tissage tridimensionnel entre une pluralité de fils de chaîne et une pluralité de file de trame, ledit renfort fibreux étant densifié par une matrice, le procédé comprend :
- l'identification d'au moins une zone endommagée (20) dans la pièce,
- la réalisation d'une portion évidée (30) par retrait du matériau composite au niveau de la zone endommagée (20) de manière à former une portion évidée (30) s'étendant depuis une première face (11) de la pièce en matériau composite jusqu'à une deuxième face (12) de ladite pièce,
- la réalisation d'une première pluralité de rainures (110) s'étendant sur la première face (11) de la pièce en matériau composite (10) à partir du ou des bords (31, 32, 33, 34, 35) de la portion évidée,
- la réalisation d'une deuxième pluralité de rainures (120) s'étendant sur la deuxième face (12) de la pièce en matériau composite à partir du ou des bords de la portion évidée,
- la réalisation d'une pluralité d'orifices (130) dans l'épaisseur de la pièce en matériau composite, chaque orifice débouchant à la fois dans une rainure de la première pluralité de rainures (110) et dans une rainure de la deuxième pluralité de rainures (120),
- le tissage tridimensionnel d'au moins une préforme fibreuse de pièce de comblement (70) comprenant une portion centrale (71) ayant une forme correspondant à la forme de la portion évidée et une pluralité de faisceaux fibreux (720, 740, 750, 770) s'étendant depuis la portion centrale (71),
- le placement de la portion centrale (71) de ladite au moins une préforme fibreuse de pièce de comblement (70) dans le volume libre (37) de la pièce en matériau composite délimité par la portion évidée (30) de la pièce (10),
- le placement d'une première partie des faisceaux fibreux de ladite au moins une préforme dans les rainures de la première pluralité de rainures (110) présentes sur la première face de la pièce et dans les orifices de la pluralité d'orifices (130) de manière à ce que les faisceaux fibreux de la première partie de faisceaux fibreux de ladite au moins une préforme débouchent dans les rainures de la deuxième pluralité de rainures (120),
- le placement d'une deuxième partie des faisceaux fibreux de ladite au moins une préforme dans les rainures de la deuxième pluralité de rainures (120) présentes sur la deuxième face de la pièce et dans les orifices de la pluralité d'orifices (130) de manière à ce que les faisceaux fibreux de la deuxième partie de faisceaux fibreux de ladite au moins une préforme débouchent dans les rainures de la première pluralité de rainures (110),
- l'imprégnation de ladite au moins une préforme fibreuse (70) avec une résine précurseur d'une matrice,
- la transformation de la résine en matrice afin d'obtenir une pièce de comblement en matériau composite comprenant un renfort fibreux densifié par une matrice, ladite pièce de comblement occupant le volume défini par la portion évidée.

2. Procédé de réparation selon la revendication 1, comprenant :
- le tissage tridimensionnel d'une première préforme fibreuse de pièce de comblement (40) comprenant une portion centrale (41) ayant une forme correspondant à la forme de la portion évidée du côté de la première face de la pièce en matériau composite et une pluralité de faisceaux fibreux (42, 43, 44, 45, 46, 47) s'étendant depuis la portion centrale (41),
- le tissage tridimensionnel d'une deuxième préforme fibreuse de pièce de comblement (50) comprenant une portion centrale (51) ayant une forme correspondant à la forme de la portion évidée du côté de la deuxième face de la pièce en matériau composite et une pluralité de faisceaux fibreux (52, 53, 54, 55, 56, 57) s'étendant depuis la portion centrale (51),
- le placement de la portion centrale (41) de la première préforme fibreuse de pièce de comblement (40) dans une partie du volume libre (37) de la pièce en matériau composite délimité par la portion évidée (30) et présente du côté de la première face (11) de la pièce (10) et des faisceaux fibreux (42, 43, 44, 45, 46, 47) dans les rainures de la première pluralité de rainures (110) présentes sur la première face de la pièce et dans les orifices de la pluralité d'orifices (130) de manière à ce que les faisceaux fibreux de la première préforme débouchent dans les rainures de la deuxième pluralité de rainures (120),
- le placement de la portion centrale (51) de la deuxième préforme fibreuse de pièce de comblement (50) dans une autre partie du volume libre (37) de la pièce en matériau composite délimité par la portion évidée (30) et présente du côté de la deuxième face (12) de la pièce (10) et des faisceaux fibreux (52, 53, 54, 55, 56, 57) dans les rainures de la deuxième pluralité de rainures (120) présentes sur la deuxième face de la pièce et dans les orifices de la pluralité d'orifices (130) de manière à ce que les faisceaux fibreux de la deuxième préforme débouchent dans les rainures de la première pluralité de rainures (110).

3. Procédé de réparation selon la revendication 2, dans lequel la réalisation de la portion évidée (30) comprend la formation de bords en vis-à-vis (31, 34) comprenant chacun des premier et deuxième biseaux (310, 311, 340, 341), la portion centrale (41) de la première préforme fibreuse de pièce de comblement (40) présentant une géométrie complémentaire d'une partie du volume (37) de la portion évidée (30) définie entre les premiers biseaux (310, 340) des bords en vis-à-vis (31, 34) et la portion centrale de la deuxième préforme fibreuse de pièce de comblement présentant une géométrie complémentaire de l'autre partie du volume de la portion évidée définie entre les deuxièmes biseaux (311, 331) des bords en vis-à-vis (31, 33).

4. Procédé selon la revendication 3, dans lequel la portion évidée (30) présente une forme polygonale, les rainures de la première pluralité de rainures (110) s'étendant chacune à partir d'un sommet du polygone formé par la portion évidée sur la première face (11) de la pièce en matériau composite (10), les rainures de la deuxième pluralité de rainures (120) s'étendant chacune à partir d'un sommet du polygone formé par la portion évidée (30) sur la deuxième face (12) de la pièce en matériau composite.

5. Procédé de réparation selon la revendication 3 ou 4, dans lequel les première et deuxième pluralités de rainures (110, 120) comprennent chacune des rainures principales (1201, 1202, 1203, 1204, 1205, 1206) s'étendant à partir des bords de la portion évidée (30) débouchant respectivement sur les première et deuxième faces (11, 12) de la pièce en matériau composite (20) et des rainures secondaires (1211, 1212, 1213, 1214, 1215, 1216) s'étendant à partir de chaque rainure principale, au moins une partie des orifices de la pluralité d'orifices (130) débouchant à la fois dans une rainure secondaire de la première pluralité de rainures (110) et dans une rainure secondaire de la deuxième pluralité de rainures (120).

6. Procédé de réparation selon l'une quelconque des revendications 2 à 4, comprenant en outre l'introduction des faisceaux fibreux (42, 43, 44, 45, 46, 47) de la première préforme fibreuse (40) de pièce de comblement dans la portion centrale (51) de la deuxième préforme fibreuse (50) et l'introduction des faisceaux fibreux (52, 53, 54, 55, 56, 57) de la deuxième préforme fibreuse de pièce de comblement (50) dans la portion centrale (41) de la première préforme fibreuse (40).

7. Pièce en matériau composite (10) comprenant un renfort fibreux présentant un tissage tridimensionnel entre une pluralité de fils de chaîne et une pluralité de fils de trame, ledit renfort fibreux étant densifié par une matrice, le renfort fibreux densifié par la matrice comporte au moins une portion évidée (30) s'étendant depuis une première face (11) de la pièce en matériau composite jusqu'à une deuxième face (12) de ladite pièce et une pièce de comblement en matériau composite (60) est présente dans le volume libre (37) de la pièce en matériau composite délimité par ladite au moins une portion évidée (30), la pièce en matériau composite comprenant une première pluralité de rainures (110) s'étendant sur la première face (11) de ladite pièce à partir du ou des bords de la portion évidée (30) débouchant sur la première face (11) et une deuxième pluralité de rainures (120) s'étendant sur la deuxième face (12) de ladite pièce à partir du ou des bords de la portion évidée débouchant sur la deuxième face, la pièce en matériau composite comprenant en outre une pluralité d'orifices (130) s'étendant dans l'épaisseur de la pièce en matériau composite (10), chaque orifice débouchant à la fois dans une rainure de la première pluralité de rainures (110) et dans une rainure de la deuxième pluralité de rainures (120), la pièce de comblement (60) comprenant au moins une préforme fibreuse de pièce de comblement (70) comprenant une portion centrale (71) présente dans le volume (37) de la portion évidée (30) et une pluralité de faisceaux fibreux (720, 740, 750, 770) s'étendant depuis la portion centrale, la portion centrale de ladite au moins une préforme présentant un tissage tridimensionnel, une première partie des faisceaux fibreux de ladite au moins une préforme fibreuse étant présents dans les rainures de la première pluralité de rainures (110) présentes sur la première face (11) de la pièce en matériau composite (10) et dans les orifices de la pluralité d'orifices (130) de manière à ce que les faisceaux fibreux de la première partie de faisceaux fibreux de ladite au moins une préforme débouchent dans les rainures de la deuxième pluralité de rainures (120), une deuxième partie des faisceaux fibreux de ladite au moins une préforme fibreuse étant présents dans les rainures de la deuxième pluralité de rainures (120) présentes sur la deuxième face (12) de la pièce en matériau composite et dans les orifices de la pluralité d'orifices (130) de manière à ce que les faisceaux fibreux de la deuxième partie de faisceaux fibreux de ladite au moins une préforme débouchent dans les rainures de la première pluralité de rainures (110).

8. Pièce selon la revendication 7, dans laquelle la pièce de comblement (60) comprend des première et deuxième préformes fibreuses de pièce de comblement (40, 50) comprenant chacune une portion centrale (41, 51) présente dans une partie du volume (37) de la portion évidée (30) et une pluralité de faisceaux fibreux (42, 43, 44, 45, 46, 47, 52, 53, 54, 55, 56, 57) s'étendant depuis la portion centrale, la portion centrale de chaque préforme présentant un tissage tridimensionnel, les faisceaux fibreux (42, 43, 44, 45, 46, 47) de la première préforme fibreuse (40) étant présents dans les rainures de la première pluralité de rainures (110) présentes sur la première face (11) de la pièce en matériau composite (10) et dans les orifices de la pluralité d'orifices (130) de manière à ce que les faisceaux fibreux de la première préforme débouchent dans les rainures de la deuxième pluralité de rainures (120), les faisceaux fibreux (52, 53, 54, 55, 56, 57) de la deuxième préforme fibreuse (50) étant présents dans les rainures de la deuxième pluralité de rainures (120) présentes sur la deuxième face (12) de la pièce en matériau composite et dans les orifices de la pluralité d'orifices (130) de manière à ce que les faisceaux fibreux de la deuxième préforme débouchent dans les rainures de la première pluralité de rainures (110).

9. Pièce selon la revendication 8, dans laquelle la portion évidée (30) comprend des bords en vis-à-vis (31, 34) comprenant chacun des premier et deuxième biseaux (310, 311, 340, 341), la portion centrale (41) de la première préforme fibreuse de pièce de comblement (40) présentant une géométrie complémentaire d'une partie du volume (37) de la portion évidée (30) définie entre les premiers biseaux (310, 340) des bords en vis-à-vis (31, 34) et la portion centrale de la deuxième préforme fibreuse de pièce de comblement présentant une géométrie complémentaire de l'autre partie du volume de la portion évidée définie entre les deuxièmes biseaux (311, 331) des bords en vis-à-vis (31, 33).

10. Pièce selon la revendication 9, dans laquelle la portion évidée (30) présente une forme polygonale, les rainures de la première pluralité de rainures (110) s'étendant chacune à partir d'un sommet du polygone formé par la portion évidée sur la première face (11) de la pièce en matériau composite (10), les rainures de la deuxième pluralité de rainures (120) s'étendant chacune à partir d'un sommet du polygone formé par la portion évidée (30) sur la deuxième face (12) de la pièce en matériau composite.

11. Pièce selon la revendication 9 ou 10, dans laquelle les première et deuxième pluralités de rainures (110, 120) comprennent chacune des rainures principales (1201, 1202, 1203, 1204, 1205, 1206) s'étendant à partir des bords de la portion évidée (30) débouchant respectivement sur les première et deuxième faces (11, 12) de la pièce en matériau composite (20) et des rainures secondaires (1211, 1212, 1213, 1214, 1215, 1216) s'étendant à partir de chaque rainure principale, au moins une partie des orifices de la pluralité d'orifices (130) débouchant à la fois dans une rainure secondaire de la première pluralité de rainures (110) et dans une rainure secondaire de la deuxième pluralité de rainures (120).

12. Pièce selon l'une quelconque des revendications 6 à 9, dans laquelle les faisceaux fibreux (42, 43, 44, 45, 46, 47) de la première préforme fibreuse de pièce de comblement (40) s'étendent dans la portion centrale (51) de la deuxième préforme fibreuse (50) et les faisceaux fibreux (52, 53, 54, 55, 56, 57) de la deuxième préforme fibreuse de pièce de comblement (50) s'étendent dans la portion centrale (41) de la première préforme fibreuse (40).

13. Pièce selon l'une quelconque des revendications 7 à 12, dans laquelle ladite pièce correspond à un carter de moteur aéronautique à turbine à gaz.

14. Moteur aéronautique à turbine à gaz ayant un carter selon la revendication 13.

15. Aéronef comprenant un ou plusieurs moteurs selon la revendication 14.

## Patentansprüche

1. Verfahren zur Reparatur eines Teils aus Verbundmaterial (10) mit einer Faserverstärkung, die ein dreidimensionales Weben aus einer Vielzahl von Kettfäden und einer Vielzahl von Schussfäden aufweist, wobei die Faserverstärkung durch eine Matrix verdichtet ist, wobei das Verfahren umfasst:
- das Identifizieren mindestens einer beschädigten Zone (20) in dem Teil,
- das Herstellen eines ausgesparten Abschnitts (30) durch Entnahme des Verbundmaterials im Bereich der beschädigten Zone (20) derart, dass ein ausgesparter Abschnitt (30) gebildet wird, der sich ab einer ersten Fläche (11) des Teils aus Verbundmaterial bis zu einer zweiten Fläche (12) des Teils erstreckt,
- das Herstellen einer ersten Vielzahl von Rillen (110), die sich auf der ersten Fläche (11) des Teils aus Verbundmaterial (10) ab dem oder den Rändern (31, 32, 33, 34, 35) des ausgesparten Abschnitts erstrecken,
- das Herstellen einer zweiten Vielzahl von Rillen (120), die sich auf der zweiten Fläche (12) des Teils aus Verbundmaterial ab dem oder den Rändern des ausgesparten Abschnitts erstrecken,
- das Herstellen einer Vielzahl von Löchern (130) in der Dicke des Teils aus Verbundmaterial, wobei jedes Loch sowohl in einer Rille der ersten Vielzahl von Rillen (110) und in einer Rille der zweiten Vielzahl von Rillen (120) ausmündet,
- das dreidimensionale Weben mindestens einer faserigen Füllstück-Vorform (70) mit einem zentralen Abschnitt (71), der eine Form hat, die der Form des ausgesparten Abschnitts entspricht, und einer Vielzahl von Fasersträngen (720, 740, 750, 770), die sich ab dem zentralen Abschnitt (71) erstrecken,
- das Platzieren des zentralen Abschnitts (71) der mindestens einen faserigen Füllstück-Vorform (70) in das freie Volumen (37) des Teils aus Verbundmaterial, das von dem ausgesparten Abschnitts (30) des Teils (10) begrenzt wird,
- das Platzieren eines ersten Teils der Faserstränge der mindestens einen Vorform in den Rillen der ersten Vielzahl von Rillen (110), die auf der ersten Fläche des Teils vorhanden sind, und in den Löchern der Vielzahl von Löchern (130) derart, dass die Faserstränge des ersten Faserstrangteils der mindestens einen Vorform in den Rillen der zweiten Vielzahl von Rillen (120) ausmünden,
- das Platzieren eines zweiten Teils der Faserstränge der mindestens einen Vorform in den Rillen der zweiten Vielzahl von Rillen (120), die auf der zweiten Fläche des Teils vorhanden sind, und in den Löchern der Vielzahl von Löchern (130) derart, dass die Faserstränge des zweiten Faserstrangteils der mindestens einen Vorform in den Rillen der ersten Vielzahl von Rillen (110) ausmünden,
- das Imprägnieren der mindestens einen faserigen Vorform (70) mit einem Vorläuferharz einer Matrix,
- das Umwandeln des Harzes in Matrix, um ein Füllstück aus Verbundmaterial zu erhalten, das eine durch eine Matrix verdichtete Faserverstärkung umfasst, wobei das Füllstück das von dem ausgesparten Abschnitt definierte Volumen besetzt.

2. Reparaturverfahren nach Anspruch 1, umfassend:
- das dreidimensionale Weben einer ersten faserigen Füllstück-Vorform (40), die einen zentralen Abschnitt (41) mit einer Form umfasst, die der Form des ausgesparten Abschnitts auf der Seite der ersten Fläche des Teils aus Verbundmaterial entspricht und einer Vielzahl von Fasersträngen (42, 43, 44, 45, 46, 47), die sich ab dem zentralen Abschnitt (41) erstrecken,
- das dreidimensionale Weben einer zweiten faserigen Füllstück-Vorform (50), die einen zentralen Abschnitt (51) mit einer Form umfasst, die der Form des ausgesparten Abschnitts auf der Seite der zweiten Fläche des Teils aus Verbundmaterial entspricht und einer Vielzahl von Fasersträngen (52, 53, 54, 55, 56, 57), die sich ab dem zentralen Abschnitt (51) erstrecken,
- das Platzieren des zentralen Abschnitts (41) der ersten faserigen Füllstück-Vorform (40) in einem Teil des freien Volumens (37) des Teils aus Verbundmaterial, das von dem ausgesparten Abschnitt (30) begrenzt wird und auf der Seite der ersten Fläche (11) des Teils (10) vorhanden ist und der Faserstränge (42, 43, 44, 45, 46, 47) in den Rillen der ersten Vielzahl von Rillen (110), die auf der ersten Fläche des Teils vorhanden sind und in den Löchern der Vielzahl von Löchern (130) derart, dass die Faserstränge der ersten Vorform in den Rillen der zweiten Vielzahl von Rillen (120) ausmünden,
- das Platzieren des zentralen Abschnitts (51) der zweiten faserigen Füllstück-Vorform (50) in einem anderen Teil des freien Volumens (37) des Teils aus Verbundmaterial, das von dem ausgesparten Abschnitt (30) begrenzt wird und auf der Seite der zweiten Fläche (12) des Teils (10) vorhanden ist und der Faserstränge (52, 53, 54, 55, 56, 57) in den Rillen der zweiten Vielzahl von Rillen (120), die auf der zweiten Fläche des Teils vorhanden sind und in den Löchern der Vielzahl von Löchern (130) derart, dass die Faserstränge der zweiten Vorform in den Rillen der ersten Vielzahl von Rillen (110) ausmünden.

3. Reparaturverfahren nach Anspruch 2, wobei das Herstellen des ausgesparten Abschnitts (30) das Bilden von gegenüberliegenden Rändern (31, 34) umfasst, die jeweils eine erste und zweite Abschrägung (310, 311, 340, 341) umfassen, wobei der zentrale Abschnitt (41) der ersten faserigen Füllstück-Vorform (40) eine Geometrie aufweist, die komplementär zu einem Teil des Volumens (37) des ausgesparten Abschnitts (30) ist, der zwischen den ersten Abschrägungen (310, 340) der gegenüberliegenden Ränder (31, 34) definiert ist, und der zentrale Abschnitt der zweiten faserigen Füllstück-Vorform eine Geometrie aufweist, der komplementär zu dem anderen Teil des Volumens des ausgesparten Abschnitts ist, der zwischen den zweiten Abschrägungen (311, 331) der gegenüberliegenden Ränder (31, 33) definiert ist.

4. Verfahren nach Anspruch 3, wobei der ausgesparte Abschnitt (30) eine polygonale Form aufweist, wobei sich die Rillen der ersten Vielzahl von Rillen (110) jeweils ab einer Spitze des Polygons erstrecken, das von dem ausgesparten Abschnitt auf der ersten Fläche (11) des Teils aus Verbundmaterial (10) gebildet ist, wobei sich die Rillen der zweiten Vielzahl von Rillen (120) jeweils ab einer Spitze des Polygons erstrecken, das von dem ausgesparten Abschnitt (30) auf der zweiten Fläche (12) des Teils aus Verbundmaterial gebildet ist.

5. Reparaturverfahren nach Anspruch 3 oder 4, wobei die erste und zweite Vielzahl von Rillen (110, 120) jeweils Hauptrillen (1201, 1202, 1203, 1204, 1205, 1206) umfassen, die sich ab den Rändern des ausgesparten Abschnitts (30) erstrecken, wobei sie jeweils auf der ersten und zweiten Fläche (11, 12) des Teils aus Verbundmaterial (20) ausmünden und sekundäre Rillen (1211, 1212, 1213, 1214, 1215, 1216), die sich ab jeder Hauptrille erstrecken, wobei mindestens ein Teil der Löcher der Vielzahl von Löchern (130) sowohl in einer sekundären Rille der ersten Vielzahl von Rillen (110) als auch in einer sekundären Rille der zweiten Vielzahl von Rillen (120) ausmündet.

6. Reparaturverfahren nach einem der Ansprüche 2 bis 4, umfassend ferner das Einführen der Faserstränge (42, 43, 44, 45, 46, 47) der ersten faserigen Füllstück-Vorform (40) in den zentralen Abschnitt (51) der zweiten faserigen Vorform (50) und das Einführen der Faserstränge (52, 53, 54, 55, 56, 57) der zweiten faserigen Füllstück-Vorform (50) in den zentralen Abschnitt (41) der ersten faserigen Vorform (40).

7. Teil aus Verbundmaterial (10), umfassend eine Faserverstärkung, die ein dreidimensionales Weben aus einer Vielzahl von Kettfäden und einer Vielzahl von Schussfäden aufweist, wobei die Faserverstärkung durch eine Matrix verdichtet ist, wobei die durch die Matrix verdichtete Faserverstärkung mindestens einen ausgesparten Abschnitt (30) umfasst, der sich ab einer ersten Fläche (11) des Teils aus Verbundmaterial bis zu einer zweiten Fläche (12) des Teils erstreckt und ein Füllstück aus Verbundmaterial (60) in dem freien Volumen (37) des Teils aus Verbundmaterial vorhanden ist, das von dem mindestens einen ausgesparten Abschnitt (30) begrenzt wird, wobei das Teil aus Verbundmaterial eine erste Vielzahl von Rillen (110) umfasst, die sich auf der ersten Fläche (11) des Teils ab dem oder den Rändern des ausgesparten Abschnitts (30) erstrecken, die auf der ersten Fläche (11) ausmünden, und eine zweite Vielzahl von Rillen (120), die sich auf der zweiten Fläche (12) des Teils ab dem oder den Rändern des ausgesparten Abschnitts erstrecken, die auf der zweiten Fläche ausmünden, wobei das Teil aus Verbundmaterial ferner eine Vielzahl von Löchern (130) umfasst, die sich in der Dicke des Teils aus Verbundmaterial (10) erstrecken, wobei jedes Loch sowohl in einer Rille der ersten Vielzahl von Rillen (110) als auch in einer Rille der zweiten Vielzahl von Rillen (120) ausmündet, wobei das Füllstück (60) mindestens eine faserige Füllstück-Vorform (70) umfasst, die einen zentralen Abschnitt (71) umfasst, der im Volumen (37) des ausgesparten Abschnitts (30) vorhanden ist und eine Vielzahl von Fasersträngen (720, 740, 750, 770), die sich ab dem zentralen Abschnitt erstrecken, wobei der zentrale Abschnitt der mindestens einen Vorform ein dreidimensionales Weben umfasst, wobei ein erster Teil der Faserstränge der mindestens einen faserigen Vorform in den Rillen der ersten Vielzahl von Rillen (110) vorhanden ist, die auf der ersten Fläche (11) des Teils aus Verbundmaterial (10) vorhanden sind und in den Löchern der Vielzahl von Löchern (130) derart, dass die Faserstränge des ersten Faserstrangteils der mindestens einen Vorform in den Rillen der zweiten Vielzahl von Rillen (120) ausmünden, wobei ein zweiter Teil der Faserstränge der mindestens einen faserigen Vorform in den Rillen der zweiten Vielzahl von Rillen (120) vorhanden ist, die auf der zweiten Fläche (12) des Teils aus Verbundmaterial vorhanden sind und in den Löchern der Vielzahl von Löchern (130) derart, das die Faserstränge des zweiten Faserstrangteils der mindestens einen Vorform in den Rillen der ersten Vielzahl von Rillen (110) ausmünden.

8. Teil nach Anspruch 7, wobei das Füllstück (60) eine erste und zweite faserige Füllstück-Vorform (40, 50) umfasst, die jeweils einen zentralen Abschnitt (41, 51) umfassen, der in einem Teil des Volumens (37) des ausgesparten Abschnitts (30) vorhanden ist und eine Vielzahl von Fasersträngen (42, 43, 44, 45, 46, 47, 52, 53, 54, 55, 56, 57), die sich ab dem zentralen Abschnitt erstrecken, wobei der zentrale Abschnitt jeder Vorform ein dreidimensionales Weben aufweist, wobei die Faserstränge (42, 43, 44, 45, 46, 47) der ersten faserigen Vorform (40) in den Rillen der ersten Vielzahl von Rillen (110) vorhanden sind, die auf der ersten Fläche (11) des Teils aus Verbundmaterial (10) vorhanden sind und in den Löchern der Vielzahl von Löchern (130) derart, dass die Faserstränge der ersten Vorform in den Rillen der zweiten Vielzahl von Rillen (120) ausmünden, wobei die Faserstränge (52, 53, 54, 55, 56, 57) der zweiten faserigen Vorform (50) in den Rillen der zweiten Vielzahl von Rillen (120) vorhanden sind, die auf der zweiten Fläche (12) des Teils aus Verbundmaterial vorhanden sind und in den Löchern der Vielzahl von Löchern (130) derart, dass die Faserstränge der zweiten Vorform in den Rillen der ersten Vielzahl von Rillen (110) ausmünden.

9. Teil nach Anspruch 8, wobei der ausgesparte Abschnitt (30) gegenüberliegende Ränder (31, 34) umfasst, die jeweils eine erste und zweite Abschrägung (310, 311, 340, 341) umfassen, wobei der zentrale Abschnitt (41) der ersten faserigen Füllstück-Vorform (40) eine Geometrie aufweist, die komplementär zu einem Teil des Volumens (37) des ausgesparten Abschnitts (30) ist, der zwischen den ersten Abschrägungen (310, 340) der gegenüberliegenden Ränder (31, 34) definiert ist, und der zentrale Abschnitt der zweiten faserigen Füllstück-Vorform eine Geometrie aufweist, die komplementär zum anderen Teil des Volumens des ausgesparten Abschnitts ist, der zwischen den zweiten Abschrägungen (311, 331) der gegenüberliegenden Ränder (31, 33) definiert ist.

10. Teil nach Anspruch 9, wobei der ausgesparte Abschnitt (30) eine polygonale Form aufweist, wobei sich die Rillen der ersten Vielzahl von Rillen (110) jeweils ab einer Spitze des Polygons erstrecken, das von dem ausgesparten Abschnitt auf der ersten Fläche (11) des Teils aus Verbundmaterial (10) gebildet ist, wobei sich die Rillen der zweiten Vielzahl von Rillen (120) jeweils ab einer Spitze des Polygons erstrecken, das von dem ausgesparten Abschnitt (30) auf der zweiten Fläche (12) des Teils aus Verbundmaterial gebildet ist.

11. Teil nach Anspruch 9 oder 10, wobei die erste und zweite Vielzahl von Rillen (110, 120) jeweils Hauptrillen (1201, 1202, 1203, 1204, 1205, 1206) umfassen, die sich ab den Rändern des ausgesparten Abschnitts (30) erstrecken, wobei sie jeweils auf der ersten und zweiten Fläche (11, 12) des Teils aus Verbundmaterial (20) ausmünden und sekundäre Rillen (1211, 1212, 1213, 1214, 1215, 1216), die sich ab jeder Hauptrille erstrecken, wobei mindestens ein Teil der Löcher der Vielzahl von Löchern (130) sowohl in einer sekundären Rille der ersten Vielzahl von Rillen (110) als auch in einer sekundären Rille der zweiten Vielzahl von Rillen (120) ausmündet.

12. Teil nach einem der Ansprüche 6 bis 9, wobei sich die Faserstränge (42, 43, 44, 45, 46, 47) der ersten faserigen Füllstück-Vorform (40) im zentralen Abschnitt (51) der zweiten faserigen Vorform (50) erstrecken und sich die Faserstränge (52, 53, 54, 55, 56, 57) der zweiten faserigen Füllstück-Vorform (50) im zentralen Abschnitt (41) der ersten faserigen Vorform (40) erstrecken.

13. Teil nach einem der Ansprüche 7 bis 12, wobei das Teil einem Gehäuse eines Flugzeugmotors mit Gasturbine entspricht.

14. Flugzeugmotor mit Gasturbine mit einem Gehäuse nach Anspruch 13.

15. Flugzeug, das einen oder mehrere Motoren nach Anspruch 14 umfasst.

## Claims

1. A method for repairing a part made of composite material (10) comprising a fiber reinforcement having a three-dimensional weaving between a plurality of warp yarns and a plurality of weft yarns, said fiber reinforcement being densified by a matrix, said method comprises:
- the identification of at least one damaged area (20) in the part,
- the production of a recessed section (30) by removal of the composite material at the damaged area (20) so as to form a recessed section (30) extending from a first face (11) of the composite material part to a second face (12) of said part,
- the production of a first plurality of grooves (110) extending on the first face (11) of the composite material part (10) from the edge(s) (31, 32, 33, 34, 35) of the recessed section,
- the production of a second plurality of grooves (120) extending on the second face (12) of the composite material part from the edge(s) of the recessed section,
- the production of a plurality of orifices (130) within the thickness of the composite material part, each orifice opening out both into a groove of the first plurality of grooves (110) and into a groove of the second plurality grooves (120),
- the tree-dimensional weaving of at least one filling part fiber preform (70) comprising a central section (71) having a shape corresponding to the shape of the recessed section and a plurality of fiber bundles (720, 740, 750, 770) extending from the central section (71),
- the placement of the central section (71) of said at least one filling part fiber preform (70) in the free volume (37) of the composite material part delimited by the recessed section (30) of the part (10),
- the placement of a first portion of the fiber bundles of said at least one preform in the grooves of the first plurality of grooves (110) present on the first face of the part and in the orifices of the plurality of orifices (130) such that the fiber bundles of the first portion of the fiber bundles of said at least one preform open out into the grooves of the second plurality of grooves (120),
- the placement of a second portion of the fiber bundles of said at least one preform in the grooves of the second plurality of grooves (120) present on the second face of the part and in the orifices of the plurality of orifices (130) such that the fiber bundles of the second portion of fiber bundles of said at least one preform open out into the grooves of the first plurality of grooves (110),
- the impregnation of said at least one fiber preform (70) with a precursor resin of a matrix,
- the transformation of the resin into a matrix in order to obtain a filling part made of composite material comprising a fiber reinforcement densified by a matrix, said filling part occupying the volume defined by the recessed section.

2. The repair method according to claim 1, comprising:
- the tree-dimensional weaving of a first filling part fiber preform (40) comprising a central section (41) having a shape corresponding to the shape of the recessed section on the side of the first face of the composite material part and a plurality of fiber bundles (42, 43, 44, 45, 46, 47) extending from the central section (41),
- the tree-dimensional weaving of a second filling part fiber preform (50) comprising a central section (51) having a shape corresponding to the shape of the recessed section on the side of the second face of the composite material part and a plurality of fiber bundles (52, 53, 54, 55, 56, 57) extending from the central section (51),
- the placement of the central section (41) of the first filling part fiber preform (40) in a portion of the free volume (37) of the composite material part delimited by the recessed section (30) and present on the side of the first face (11) of the part (10) and of the fiber bundles (42, 43, 44, 45, 46, 47) in the grooves of the first plurality of grooves (110) present on the first face of the part and in the orifices of the plurality of orifices (130) such that the fiber bundles of the first preform open out into the grooves of the second plurality of grooves (120),
- the placement of the central section (51) of the second filling part fiber preform (50) in another portion of the free volume (37) of the composite material part delimited by the recessed section (30) and present on the side of the second face (12) of the part (10) and of the fiber bundles (52, 53, 54, 55, 56, 57) in the grooves of the second plurality of grooves (120) present on the second face of the part and in the orifices of the plurality of orifices (130) such that the fiber bundles of the second preform open out into the grooves of the first plurality of grooves (110).

3. The repair method according to claim 2, wherein the production of the recessed section (30) comprises the formation of facing edges (31, 34) each comprising first and second bevels (310, 311, 340, 341), the central section (41) of the first filling part fiber preform (40) having a geometry complementary to a portion of the volume (37) of the recessed section (30) defined between the first bevels (310, 340) of the facing edges (31, 34) and the central section of the second filling part fiber preform having a geometry complementary to the other portion of the volume of the recessed section defined between the second bevels (311, 331) of the facing edges (31, 33).

4. The method according to claim 3, wherein the recessed section (30) has a polygonal shape, the grooves of the first plurality of grooves (110) each extending from a vertex of the polygon formed by the recessed section on the first face (11) of the composite material part (10), the grooves of the second plurality of grooves (120) each extending from a vertex of the polygon formed by the recessed section (30) on the second face (12) of the composite material part.

5. The repair method according to claim 3 or 4, wherein the first and second pluralities of grooves (110, 120) each comprise main grooves (1201, 1202, 1203, 1204, 1205, 1206) extending from the edges of the recessed section (30) opening out respectively onto the first and second faces (11, 12) of the composite material part (20) and secondary grooves (1211, 1212, 1213, 1214, 1215, 1216) extending from each main groove, at least part of the orifices of the plurality of orifices (130) opening out both into a secondary groove of the first plurality of grooves (110) and into a secondary groove of the second plurality of grooves (120).

6. The repair method according to any one of claims 2 to 4, further comprising the introduction of the fiber bundles (42, 43, 44, 45, 46, 47) of the first filling part fiber preform (40) into the central section (51) of the second fiber preform (50) and the introduction of the fiber bundles (52, 53, 54, 55, 56, 57) of the second filling part fiber preform (50) into the central section (41) of the first fiber preform (40).

7. A part made of composite material (10) comprising a fiber reinforcement having a three-dimensional weaving between a plurality of warp yarns and a plurality of weft yarns, said fiber reinforcement being densified by a matrix, the fiber reinforcement densified by the matrix includes at least one recessed section (30) extending from a first face (11) of the composite material part to a second face (12) of said part and a filling part made of composite material (60) is present in the free volume (37) of the composite material part delimited by said at least one recessed section (30), the composite material part comprising a first plurality of grooves (110) extending on the first face (11) of said part from the edge(s) of the recessed section (30) opening out onto the first face (11) and a second plurality of grooves (120) extending on the second face (12) of said part from the edge(s) of the recessed section opening out onto the second face, the composite material part further comprising a plurality of orifices (130) extending within the thickness of the composite material part (10), each orifice opening out both into a groove of the first plurality of grooves (110) and into a groove of the second plurality of grooves (120), the filling part (60) comprising at least one filling part fiber preform (70) comprising a central section (71) present within the volume (37) of the recessed section (30) and a plurality of fiber bundles (720, 740, 750, 770) extending from the central section, the central section of said at least one preform having a three-dimensional weaving, a first portion of the fiber bundles of said at least one fiber preform being present in the grooves of the first plurality of grooves (110) present on the first face (11) of the composite material part (10) and in the orifices of the plurality of orifices (130) such that the fiber bundles of the first portion of fiber bundles of said at least one preform open out into the grooves of the second plurality of grooves (120), a second portion of the fiber bundles of said at least one fiber preform being present in the grooves of the second plurality of grooves (120) present on the second face (12) of the composite material part and in the orifices of the plurality of orifices (130) such that the fiber bundles of the second portion of fiber bundles of said at least one preform open out into the grooves of the first plurality of grooves (110).

8. The part according to claim 7, wherein the filling part (60) comprises first and second filling part fiber preforms (40, 50) each comprising a central section (41, 51) present in a portion of the volume (37) of the recessed section (30) and a plurality of fiber bundles (42, 43, 44, 45, 46, 47, 52, 53, 54, 55, 56, 57) extending from the central section, the central section of each preform having a three-dimensional weaving, the fiber bundles (42, 43, 44, 45, 46, 47) of the first fiber preform (40) being present in the grooves of the first plurality of grooves (110) present on the first face (11) of the composite material part (10) and in the orifices of the plurality of orifices (130) such that the fiber bundles of the first preform open out into the grooves of the second plurality of grooves (120), the fiber bundles (52, 53, 54, 55, 56, 57) of the second fiber preform (50) being present in the grooves of the second plurality of grooves (120) present on the second face (12) of the composite material part and in the orifices of the plurality of orifices (130) such that the fiber bundles of the second preform open out into the grooves of the first plurality of grooves (110).

9. The part according to claim 8, wherein the recessed section (30) comprises facing edges (31, 34) each comprising first and second bevels (310, 311, 340, 341), the central section (41) of the first filling part fiber preform (40) having a geometry complementary to a portion of the volume (37) of the recessed section (30) defined between the first bevels (310, 340) of the facing edges (31, 34) and the central section of the second filling part fiber preform having a geometry complementary to the other portion of the volume of the recessed section defined between the second bevels (311, 331) of the facing edges (31, 33).

10. The part according to claim 9, wherein the recessed section (30) has a polygonal shape, the grooves of the first plurality of grooves (110) each extending from a vertex of the polygon formed by the recessed section on the first face (11) of the composite material part (10), the grooves of the second plurality of grooves (120) each extending from a vertex of the polygon formed by the recessed section (30) on the second face (12) of the composite material part.

11. The part according to claim 9 or 10, wherein the first and second pluralities of grooves (110, 120) each comprise main grooves (1201, 1202, 1203, 1204, 1205, 1206) extending from the edges of the recessed section (30) opening out respectively onto the first and second faces (11, 12) of the composite material part (20) and secondary grooves (1211, 1212, 1213, 1214, 1215, 1216) extending from each main groove, at least one portion of the orifices of the plurality of orifices (130) opening out both into a secondary groove of the first plurality of grooves (110) and into a secondary groove of the second plurality of grooves (120).

12. The part according to any one of claims 6 to 9, wherein the fiber bundles (42, 43, 44, 45, 46, 47) of the first filling part fiber preform (40) extend in the central section (51) of the second fiber preform (50) and the fiber bundles (52, 53, 54, 55, 56, 57) of the second filling part fiber perform (50) extend in the central section (41) of the first fiber preform (40).

13. The part according to any one of claims 7 to 12, wherein said part corresponds to a casing of an aeronautical gas turbine engine.

14. An aeronautical gas turbine engine having a casing according to claim 13.

15. An aircraft comprising one or several engines according to claim 14.
